# EUROPÄISCHE PATENTSCHRIFT

(11) **EP 2 156 937 B1**
(45) Veröffentlichungstag und Bekanntmachung des Hinweises auf die Patenterteilung: **28.09.2011**
(21) Anmeldenummer: 09009703.1
(22) Anmeldetag: 28.07.2009
(51) Int. Cl.: B29C 45/28

(54) **Spritzgiesswerkzeug mti verschliessbarer Heisskanaldüse**
Injection moulding tool with closable heating channel nozzle
Outil de moulage par injection doté d'une buse à canal chaud refermable

(30) Priorität: 22.08.2008 DE 102008039336
(43) Veröffentlichungstag der Anmeldung: 24.02.2010
(73) Patentinhaber: Otto Männer Innovation GmbH, 79353 Bahlingen (DE)
(72) Erfinder: Selak, Vincenc, 67860 Rhinau (FR); Spuller, Swen, 79362 Forchheim (DE)
(74) Vertreter: Dimmerling & Huwer

(56) Entgegenhaltungen:
- EP-A- 0 936 048
- EP-A- 1 223 020
- WO-A-02/066224
- DE-A1- 3 833 220
- DE-A1- 19 857 735
- DE-U1-202006 005 404
- JP-A- 4 112 020
- US-A- 5 055 026
- KAZMER D ET AL: "MULTI-CAVITY PRESSURE CONTROL IN THE FILLING AND PACKING STAGES OF THE INJECTION MOLDING PROCESS" POLYMER ENGINEERING & SCIENCE, WILEY, HOBOKEN, NJ, US, Bd. 37, Nr. 11, 1. November 1997 (1997-11-01), Seiten 1865-1879, XP000776243 ISSN: 0032-3888

## Beschreibung

Die Erfindung betrifft ein Spritzgießwerkzeug nach dem Oberbegriff des Anspruchs 1, mit wenigstens einer Heißkanaldüse, welche eine Auslassöffnung aufweist, welche mittels einer Verschlussnadel verschließbar ist.

Ein derartiges Spritzgießwerkzeug ist im Stand der Technik hinlänglich bekannt und wird nahezu regelmäßig zur Herstellung von Kunststoffteilen verwendet. Dadurch, dass die Auslassöffnung der Heißkanaldüse mittels einer Verschlussnadel verschließbar ist, lassen sich Kunststoffteile herstellen, welche eine kaum erkennbare Angussstelle haben. Das heißt, mittels des bekannten Spritzgießwerkzeugs lassen sich Kunststoffteile sehr hoher Qualität herstellen.

Es kann jedoch vorkommen, dass die Verschlussnadel die Auslassöffnung nicht vollständig verschließt. Ursache hierfür kann beispielsweise ein erkalteter Kunststoffpfropfen in der Auslassöffnung sein. Wird die Auslassöffnung jedoch nicht verschlossen, wirkt sich dies sehr nachteilig auf die Angussstelle des Kunststoffteils aus. An der Angussstelle des Kunststoffteils bleibt ein Anguss bestehen, der zur Unbrauchbarkeit des Kunststoffteils führen kann.

Da ein derartiger Fehler häufig nicht sofort erkannt wird, kann es vorkommen, dass eine Vielzahl unbrauchbarer Kunststoffteile produziert wird. Dass dies sehr nachteilig ist, liegt auf der Hand.

Aus der DE 198 57 735 A1 ist eine Stell- und Regelvorrichtung für mindestens einen Heiß- oder Kaltkanal eines Kunststoff-Formwerkzeugs bekannt, der mit einem Formhohlraum eines Kunststoff-Formwerkzeugs verbunden ist. In dem mindestens einen Kanal ist ein Nadelelement vorgesehen, dass mittels einer Antriebseinrichtung im Kanal längs verstellbar ist. Das Nadelelement ist mit einer Schraubspindel kombinierbar, die in ein Mutterelement eingeschraubt ist. Die Schraubspindel oder das Mutterelement sind mittels der Antriebseinrichtung rotativ antreibbar, um das Nadelelement in Bezug auf den Formhohlraum axial definiert und wunschgemäß zu verstellen.

Des Weiteren ist aus der WO 02/066224 A1 eine Vorrichtung zur Überwachung der Position einer Verschlussnadel einer Spritzgießdüse bekannt, welche einen Sensor aufweist, welcher unmittelbar am Ende der Verschlussnadel angeordnet ist. Mittels des Sensors lässt sich feststellen, ob die Position einer Verschlussnadel innerhalb eines vorgegebenen Bereichs ist.

Darüber hinaus ist aus der EP 0 936 048 A1 ein Spritzgießwerkzeug mit einer verschließbaren Heißkanaldüse bekannt, deren Position mittels eines Sensors überwacht und mit einer vorbestimmten Position verglichen wird. Befindet sich die Verschlussnadel außerhalb ihrer ordnungsgemäßen Position, kann der Spritzgießvorgang angehalten werden. Der Sensor ist gegenüber dem Endbereich der Verschlussnadel angeordnet.

Es ist Aufgabe der Erfindung, ein eingangs genanntes Spritzgießwerkzeug derart auszubilden, dass mit hoher Zuverlässigkeit festgestellt werden kann, ob die Auslassöffnung der Heißkanaldüse mittels der Verschlussnadel verschlossen ist. Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Spritzgießwerkzeug mit wenigstens einer Heißkanaldüse, welche eine Auslassöffnung aufweist, welche mittels einer Verschlussnadel verschließbar ist, dadurch gekennzeichnet, dass ein Element vorhanden ist, mittels dem zumindest eine Position der Verschlussnadel erfassbar ist, in der die Auslassöffnung verschlossen ist, wobei die Verschlussnadel mittels eines Betätigungselements in die Verschlussposition verstellbar ist und zwischen dem Betätigungselement und der Verschlussnadel ein Kraftsensor angeordnet ist.

Da die auf die Verschlussnadel ausgeübte Kraft ansteigt, wenn sich die Verschlussnadel nicht bis in ihre Sollposition verstellen lässt, das heißt bis in die Position verstellen lässt, in der sie sich in der Auslassöffnung befindet, und die erhöhte Kraft vom Kraftsensor festgestellt werden kann, bildet der Kraftsensor somit auch ein Element zur Erfassung der Position der Verschlussnadel. Der Kraftsensor kann daher anstelle eines elektrischen Schalters oder Näherungssensors verwendet werden. Er lässt sich aber auch zusätzlich verwenden, wodurch die Zuverlässigkeit der Positionserfassung erhöht wird.

In vorteilhafter Weise ist der Kraftsensor als Piezoelement ausgebildet. Hierzu lässt er sich auf besonders einfache Weise in dem Spritzgießwerkzeug anordnen.

Dadurch, dass ein Element vorhanden ist, mittels dem zumindest eine Position der Verschlussnadel erfassbar ist, kann auf einfache Weise festgestellt werden, ob die Auslassöffnung verschlossen ist. Hierzu muss die Position der Verschlussnadel erfasst werden, in der sich die Verschlussnadel in der Auslassöffnung befindet, das heißt die Auslassöffnung verschlossen ist. Wird die Position erkannt, bedeutet dies, dass die Auslassöffnung verschlossen ist. Durch die Erfassung dieser Position der Verschlussnadel lässt sich somit mittelbar feststellen, ob die Auslassöffnung verschlossen ist.

Wird festgestellt, dass sich die Verschlussnadel zu einem Zeitpunkt, zu dem die Auslassöffnung verschlossen sein sollte, nicht in der Position befindet, in der sie die Auslassöffnung verschließt, bedeutet dies, dass die Auslassöffnung nicht verschlossen ist. Daraufhin können entsprechende Maßnahmen eingeleitet werden, die zur Behebung des hierfür ursächlichen Fehlers führen. Da der Fehler sofort erkannt werden kann, ist die Anzahl produzierter unbrauchbarer Kunststoffteile sehr gering.

Als sehr vorteilhaft hat sich eine Ausführungsform der Erfindung herausgestellt, bei der das Element zur Erfassung der Position der Verschlussnadel als elektrischer Kontaktgeber ausgebildet ist. Beispielsweise lässt sich in dem Spritzgießwerkzeug ein Schalter anordnen, der so justiert ist, dass er exakt dann schließt, wenn sich die Verschlussnadel in ihrer Schließposition befindet.

In besonders vorteilhafter Weise kann bei einem Spritzgießwerkzeug, bei dem die Verschlussnadel mittels eines Betätigungselements in die Schließposition verstellbar ist, das Element zur Erfassung der Position der Verschlussnadel als Schalter ausgebildet sein, von dem ein erster Kontakt an dem Betätigungselement angeordnet ist, und ein zweiter Kontakt an einem Anschlag angeordnet ist, gegen den das Betätigungselement in der Schließposition stößt.

Eine derartige Ausführungsform ist insbesondere dann vorteilhaft, wenn das Betätigungselement als Pneumatikzylinder ausgebildet ist, da hierbei der erste Kontakt des Schalters durch den Kolben gebildet werden kann und der zweite Kontakt des Schalters durch ein elektrisch isoliertes Element in der betreffenden Wandung des Zylindergehäuses, die den Anschlag für den Kolben in der Schließposition der Verschlussnadel bildet, gebildet werden kann. Eine derartige Ausführungsform ist sehr kostengünstig herzustellen und erlaubt darüber hinaus noch die Nachrüstung bereits bestehender Spritzgießwerkzeuge. Zur Nachrüstung braucht lediglich der vorhandene Pneumatikzylinder gegen einen erfindungsgemäß ausgebildeten Pneumatikzylinder ausgetauscht zu werden.

Das Element zur Erfassung der Position der Verschlussnadel kann aber auch als Näherungssensor ausgebildet sein. Der Näherungssensor lässt sich in der Regel problemlos in einem Spritzgießwerkzeug anordnen.

Als sehr vorteilhaft hat sich eine Position des Näherungssensors herausgestellt, bei der der Näherungssensor in einem Abstand vom Kolben des Zylinders angeordnet ist, mittels dem die Verschlussnadel betätigbar ist. Durch den Hub des Kolbens wird der Näherungssensor betätigt.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine schematische Darstellung einer ersten erfindungsgemäß ausgebil- deten Anordnung, und
- Fig. 2: eine schematische Darstellung einer zweiten erfindungsgemäß ausge- bildeten Anordnung.

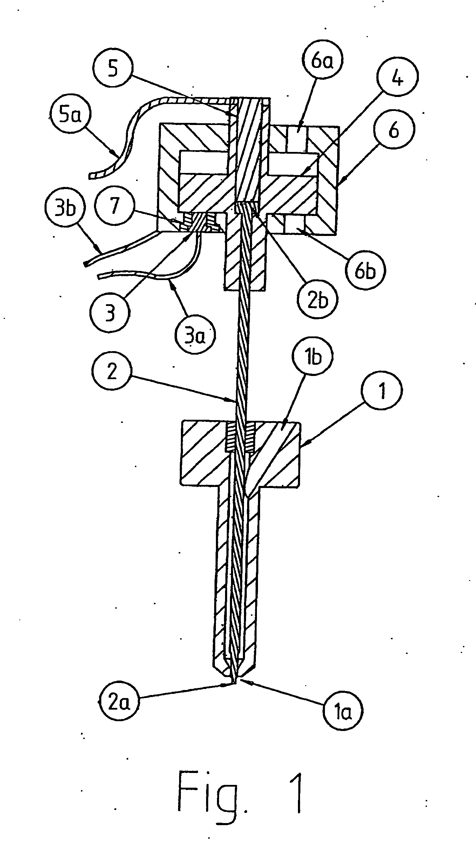

Wie Fig. 1 entnommen werden kann, weist eine Spritzgießdüse 1 eine Auslassöffnung 1a für über einen Schmelzekanal 1b zugeführte Schmelze auf. Die Auslassöffnung 1a ist mittels einer Verschlussnadel 2, welche in axialer Richtung verstellbar in der Heißkanaldüse 1 angeordnet ist, verschließbar. Zum Verschließen der Auslassöffnung 1 a wird die Verschlussnadel 2 in eine Position verstellt, in der sich ihre Spitze 2a in der Auslassöffnung 1 befindet. Diese Position ist in Fig. 1 dargestellt.

Zur Verstellung der Verschlussnadel 2 ist das ihrer Spitze 2a entgegengesetzte Ende 2b, welches einen im Durchmesser vergrößerten abgestuften Bereich hat, mit dem Kolben 4 eines Pneumatikzylinders verbunden. Durch Zuführen von Druckluft über eine erste Öffnung 6a des Zylindergehäuses 6 wird der Kolben 4 auf die untere Wandung des Gehäuses 6 gedrückt, wodurch die Spitze 2a der Verschlussnadel 2 in die Auslassöffnung 1a gelangt und diese verschließt. Durch Zuführen von Druckluft über eine zweite Öffnung 6b wird der Kolben 4 gegen die entgegengesetzte Wandung des Gehäuses 6 gedrückt. In dieser Stellung befindet sich die Spitze 2a der Verschlussnadel 2 nicht mehr in der Auslassöffnung 1a, wodurch diese geöffnet ist.

In der unteren Wandung des Zylindergehäuses 6, gegen die der Kolben 4 stößt, wenn sich die Verschlussnadel 2 in ihrer Schließposition befindet, ist über eine elektrisch nicht leitende Hülse 7 ein elektrischer Kontakt 3 angeordnet. Zwischen dem elektrischen Kontakt 3 und dem Kolben 4 besteht nur dann eine elektrisch leitende Verbindung, wenn der Kolben 4 gegen die untere Wandung des Zylindergehäuses 6 stößt, das heißt wenn sich die Verschlussnadel 2 in ihrer Schließposition befindet. Befindet sich die Verschlussnadel 2 nicht in ihrer Schließposition, das heißt stößt der Kolben 4 nicht auf die unter Wandung des Zylindergehäuses 6, besteht zwischen dem Kolben 4 und dem Kontakt 3 keine elektrisch leitende Verbindung. Der Kolben 4 und der Kontakt 3 bilden somit einen elektrischen Schalter, der nur dann geschlossen ist, wenn sich die Verschlussnadel 2 in ihrer Schließposition befindet.

Da der Kolben 4 elektrisch leitend mit dem Zylindergehäuse 6 verbunden ist, lässt sich das Schaltsignal am Zylindergehäuse 6 sowie am Kontakt 3 abnehmen. Hierzu ist der Kontakt 3 mit einer ersten Signalleitung 3a verbunden und das Zylindergehäuse 6 mit einer zweiten Signalleitung 3b. Die erste Signalleitung 3a und die zweite Signalleitung 3b sind des Weiteren mit einer in der Fig. 1 nicht dargestellten Steuerung verbunden.

Oberhalb der Verschlussnadel 2 ist ein Piezoelement 5 angeordnet, welches mit dem Kolben 4 verbunden ist und daher beim Verstellen der Verschlussnadel 2 in ihre Schließposition eine Kraft auf das der Spitze 2a abgewandte Ende 2b der Verschlussnadel 2 ausübt. Das vom Piezoelement 5 abgegebene Signal wird mittels einer dritten Signalleitung 5a der in der Fig. 1 nicht dargestellten Steuerung zugeführt.

Wird durch Zuführen von Druckluft über die erste Öffnung 6a auf den Kolben 4 eine Kraft in Richtung der unteren Wandung des Zylindergehäuses 6 ausgeübt, drückt das Piezoelement 5 auf das der Verschlussnadelspitze 2a abgewandte Ende 2b der Verschlussnadel 2. Hierdurch wird die Verschlussnadel 2 in ihre Schließposition verstellt.

Ist die Auslassöffnung 1a beispielsweise durch einen erkalteten Kunststoffpfropfen verschlossen, kann die Spitze 2a der Verschlussnadel 2 nicht in die Auslassöffnung 1a gelangen. Der Kolben 4 kann daher nicht auf die untere Wandung des Zylindergehäuses 6 stoßen, wodurch er keinen elektrischen Kontakt mit dem Kontakt 3 bildet. Die erste Signalleitung 3a ist somit mit der zweiten Signalleitung 3b nicht verbunden. Hierdurch erkennt die in der Fig. 1 nicht dargestellte Steuerung, dass sich die Verschlussnadel 2 nicht in ihrer Schließposition befindet, dass heißt die Auslassöffnung 1 a nicht verschlossen ist. Ist dies zu einem Zeitpunkt der Fall, zu dem die Auslassöffnung 1a geschlossen sein sollte, erkennt die Steuerung, dass ein Fehler vorliegt.

Da der Kolben 4 nicht auf die untere Wandung des Zylindergehäuses 6 stößt, wird die auf den Kolben 4 wirkende Gegenkraft nicht von der unteren Wandung des Zylindergehäuses 6 aufgebracht sondern von der Verschlussnadel 2. Da die Verschlussnadel 2 nicht direkt mit dem Kolben 4 verbunden ist sondern über das Piezoelement 5, kann diese Gegenkraft vom Piezoelement 5 erfasst werden. Das entsprechende Signal wird über die dritte Signalleitung 5a an die in der Fig. 1 nicht dargestellte Steuerung übermittelt.

Gibt das Piezoelement 5 zu einem Zeitpunkt, zu dem die Auslassöffnung 1a verschlossen sein sollte, ein entsprechendes Signal ab, bedeutet dies, dass der Kolben 4 nicht auf die untere Wandung des Zylindergehäuses 6 stößt und die auf den Kolben 4 wirkende Gegenkraft nicht von der unteren Wandung aufgebracht wird, sondern sich in einem Abstand von der unteren Wandung des Zylindergehäuses 6b befindet und die Gegenkraft von der Verschlussnadel 2 aufgebracht wird, was wiederum bedeutet, dass sich die Verschlussnadel 2 nicht in ihrer Schließposition befindet.

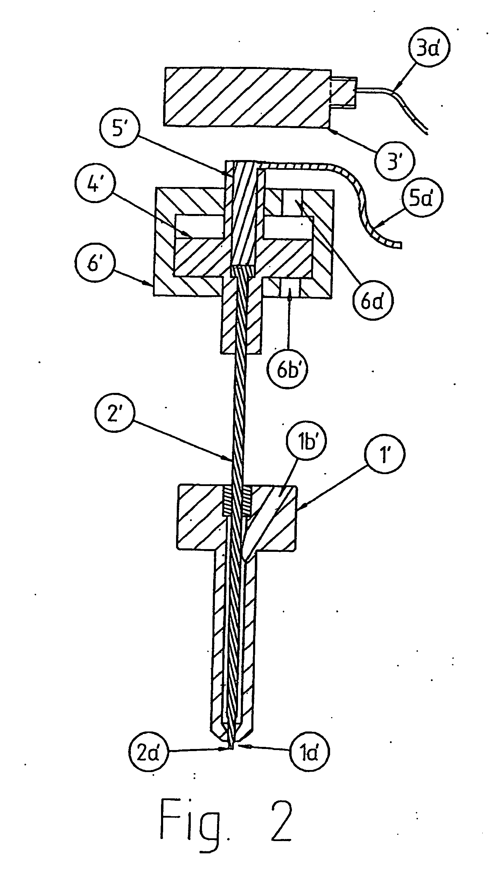

Die in Fig. 2 dargestellte Anordnung entspricht im Wesentlichen der in Fig. 1 dargestellten Anordnung. Gleiche Elemente sind daher mit denselben Bezugszeichen versehen; zur Unterscheidung weisen sie jedoch einen Strich auf.

Im Unterschied zu der in Fig. 1 dargestellten Ausführungsform ist das Positionserfassungselement nicht durch einen elektrischen Kontakt gebildet sondern durch einen Näherungssensor 3'. Wie Fig. 2 entnommen werden kann, ist der Näherungssensor 3' oberhalb des aus einem Kolben 4' und einem Zylindergehäuse 6' gebildeten Pneumatikzylinders angeordnet. Der Näherungssensor 3' hat vorzugsweise eine Messdistanz von null bis zehn Millimeter, eine Auflösung kleiner 0,01 Millimeter und eine Wiederholgenauigkeit von kleiner 0,015 Millimeter. Der Näherungssensor 3' ist so angeordnet beziehungsweise eingestellt, dass er ein Signal abgibt, wenn sich der Kolben 4' unmittelbar vor der unteren Wandung des Zylindergehäuses 6' befindet. Das heißt, der Näherungssensor 3' gibt ein Signal ab, wenn sich die Verschlussnadel 2' bereits nahezu vollständig in ihrer Schließposition befindet.

Befindet sich der Kolben 4' in einem Abstand von der unteren Wandung des Zylindergehäuses 6', gibt der Näherungssensor 3' kein Signal ab. Das Signal des Näherungssensors 3' wird über eine erste Signalleitung 3a' einer in Fig. 2 nicht dargestellten Steuerung übermittelt.

Ansonsten entspricht die Funktionsweise der in Fig. 2 dargestellten Anordnung der Funktionsweise der in Fig. 1 dargestellten Anordnung.

## Patentansprüche

1. Spritzgießwerkzeug mit wenigstens einer Heißkanaldüse (1; 1'), welche eine Auslassöffnung (1a; 1a') aufweist, welche mittels einer Verschlussnadel (2; 2') verschließbar ist, wobei ein Element (3; 3') vorhanden ist, mittels dem die Position der Verschlussnadel (2; 2') erfassbar ist, in der die Auslassöffnung (1a; 1a') verschlossen ist, wobei die Verschlussnadel (2; 2') mittels eines Betätigungselements (4; 4') in die Verschlussposition verstellbar ist, **dadurch gekennzeichnet, dass** zwischen dem Betätigungselement (4; 4') und der Verschlussnadel (2; 2') ein Kraftsensor (5; 5') angeordnet ist.

2. Spritzgießwerkzeug nach Anspruch 1,
**dadurch gekennzeichnet,**
**dass** das Element (3') als elektrischer Schalter ausgebildet ist.

3. Spritzgießwerkzeug nach Anspruch 2,
**dadurch gekennzeichnet,**
**dass** das Betätigungselement (4') einen ersten Kontakt des Schalters (3') aufweist und ein Anschlag, gegen den das Betätigungselement (4') in der Verschlussposition stößt, einen zweiten Kontakt des Schalters (3') aufweist.

4. Spritzgießwerkzeug nach Anspruch 1,
**dadurch gekennzeichnet,**
**dass** das Element (3) als Näherungssensor ausgebildet ist.

5. Spritzgießwerkzeug nach einem der Ansprüche 1 bis 4,
**dadurch gekennzeichnet,**
**dass** der Kraftsensor (5; 5') als Piezoelement ausgebildet ist.

## Claims

1. Injection moulding tool with at least one heating channel nozzle (1; 1') which possesses an outlet opening (1a; 1a') which can be closed by means of a shut-off needle (2; 2'), whereby an element (3; 3') is provided by means of which the position of the shut-off needle (2; 2') in which the outlet opening (1a; 1a') is closed can be detected, whereby the shut-off needle (2; 2') can be moved into the closing position by means of an operating element (4; 4'), **characterised in that** a force sensor (5; 5') is arranged between the operating element (4; 4') and the shut-off needle (2; 2').

2. Injection moulding tool according to claim 1, **characterised in that** the element (3') is in the form of an electrical switch.

3. Injection moulding tool according to claim 2, **characterised in that** the operating element (4') possesses a first contact of the switch (3'), and a stop against which the operating element (4') presses in the closing position possesses a second contact of the switch (3').

4. Injection moulding tool according to claim 1, **characterised in that** the element (3) is in the form of a proximity sensor.

5. Injection moulding tool according to one of the claims 1 to 4, **characterised in that** the force sensor (5; 5') is in the form of a piezo element.

## Revendications

1. Outil de moulage par injection doté d'au moins une buse à canal chaud (1 ; 1'), laquelle présente une ouverture de sortie (1a ; 1a') qui peut être fermée au moyen d'une aiguille de fermeture (2 ; 2'), un élément (3 ; 3') étant présent, au moyen duquel il est possible de détecter la position de l'aiguille de fermeture (2 ; 2') dans laquelle l'ouverture de sortie (1a ; 1a') est fermée,
l'aiguille de fermeture (2 ; 2') pouvant être réglée dans la position de fermeture au moyen d'un élément d'actionnement (4 ; 4'),
**caractérisé en ce**
**qu'**un capteur de force (5 ; 5') est disposé entre l'élément d'actionnement (4 ; 4') et l'aiguille de fermeture (2 ; 2').

2. Outil de moulage par injection selon la revendication 1
**caractérisé en ce**
**que** l'élément (3') est réalisé sous la forme d'un commutateur électrique.

3. Outil de moulage par injection selon la revendication 2
**caractérisé en ce**
**que** l'élément d'actionnement (4') présente un premier contact du commutateur (3') et une butée, contre laquelle cogne l'élément d'actionnement (4') dans la position de fermeture, présente un deuxième contact du commutateur (3').

4. Outil de moulage par injection selon la revendication 1
**caractérisé en ce**
**que** l'élément (3) est réalisé sous la forme d'un détecteur de proximité.

5. Outil de moulage par injection selon une des revendications 1 à 4,
**caractérisé en ce**
**que** le capteur de force (5 ; 5') est réalisé sous la forme d'un élément piézoélectrique.
